# EUROPEAN PATENT APPLICATION

(11) **EP 4 443 635 A1**
(43) Date of publication of application: **09.10.2024**
(21) Application number: 23898358.9
(22) Date of filing: 30.11.2023
(51) Int. Cl.: H01M 50/516, H01M 50/533, H01M 50/591, H01M 50/586, H01M 50/569, H01M 50/178, H01M 50/211, H01M 10/42, B23K 26/21

(54) **CTP-TYPE HIGH ENERGY DENSITY BATTERY PACK**

(30) Priority: 02.12.2022 KR 20220166712
(71) Applicant: LG Energy Solution, Ltd., Seoul 07335 (KR)
(72) Inventor: PARK, Jun Hee, Daejeon 34122 (KR)
(74) Representative: Plasseraud IP
(86) International application number: PCT/KR2023/019619
(87) International publication number: WO 2024/117835

(57) **Abstract**

Disclosed is a battery pack including a battery cell stack formed as a result of a plurality of pouch-shaped battery cells having electrode leads protruding from opposite sides thereof being stacked in one direction, an internal connection member coupled to opposite ends of the battery cell stack from which the electrode leads protrude, and a pack frame configured to receive the battery cell stack and the internal connection member, wherein a weld is formed at a part at which a first electrode lead and a second electrode lead protruding respectively from a first battery cell and a second battery cell of the battery cell stack, which neighbor each other, are bent in different directions and overlap each other, all battery cells constituting the battery cell stack are connected to each other in series in a zigzag fashion, and the internal connection member includes an insulation cover configured to isolate the electrode leads from the outside and a sensing member electrically connected to the weld. The disclosed battery pack is differentiated in that 1) manufacturing efficiency is high, 2) space is efficiently used and the battery pack is lightweight, and 3) a separate part, such as a busbar, is not used.

## Description

### [Technical Field]

This application claims the benefit of priority to Korean Patent Application No. 2022-0166712 filed on December 2, 2022, the disclosure of which is incorporated herein by reference in its entirety.

The present invention relates to a CTP type high energy density battery pack. More particularly, the present invention relates to a cell-to-pack (CTP) type high energy density battery pack in which a plurality of battery cells is connected to each other in series and the plurality of battery cells is directly manufactured into a pack without a separate module.

### [Background Art]

A general battery pack is manufactured by manufacturing a battery module including a plurality of battery cells and connecting a plurality of battery modules to each other. A battery cell is manufactured, a battery module is manufactured by a separate manufacturer or on a separate assembly line, and a battery pack is manufactured using the battery module. The battery module includes a separate case for insulation and safety, which occupies space and increases weight. A conventional battery module or a battery pack including the same uses a busbar in order to electrically connect battery cells to each other. The busbar requires space for separate electrical connection in the battery module or the battery pack, parts and space for insulation, etc.

In order to provide a high energy density battery pack, efficient use of space is a top priority. 1) A conventional battery pack is manufactured through a battery cell manufacturing step, a battery module manufacturing step, and a battery pack manufacturing step, and therefore the manufacturing step is complicated and manufacturing efficiency is low. 2) A separate battery module is used as an intermediate part, whereby space is wasted and weight is increased. 3) A separate busbar is required to connect battery cells to each other, which requires space and additional parts and space for insulation between busbars.

As such, there are many improvements to be made to the conventional battery pack, not only in terms of energy density but also in terms of manufacturing.

Patent Document 1 relates to a battery pack including a battery cell stack in which a plurality of battery cells is stacked, a pack case configured to receive the battery cell stack, an interconnected board (ICB) housing on which electrode terminals withdrawn from the plurality of battery cells are disposed, and an interconnected board (ICB) block mounted on the ICB housing, the ICB block being in direct contact with the electrode terminals.

In Patent Document 1, a battery pack is directly manufactured using battery cells without manufacturing a battery module, but a busbar is required to connect the battery cells to each other, and a separate ICB housing configured to allow the busbar and a sensing wire to be mounted thereon must be provided. In addition, individual electrode leads must be connected to the busbar, which is cumbersome.

Even in Patent Document 2, a battery pack is directly manufactured using battery cells without manufacturing a battery module. Even in Patent Document 2, individual electrode leads must be connected to a busbar, and a separate housing for the busbar and other components must be provided.

Patent Document 3 discloses a battery module in which electrode leads of adjacent battery cells are connected to each other by welding, and the battery cells are bent into a zigzag structure to form a battery cell stack. Since the electrode leads are welded and the battery cells are stacked while being bent in a zigzag fashion, it is important to maintain coupling between the electrode leads. Patent Document 3 does not seem to recognize this problem and thus does not provide a solution.

Meanwhile, in Patent Document 3, a battery module is manufactured, and then a battery pack is manufactured using the same, and it seems that a conventional busbar and a conventional busbar frame are used in a process of manufacturing the battery module.

Patent Document 4 includes a cell stack including battery cells stacked in one direction and at least one lead overlap portion formed as a result of overlapping of electrode leads of the battery cells and a voltage sensing member including at least one sensing part directly connected to the at least one lead overlap portion, wherein each of the lead overlap portions and a corresponding one of the sensing parts are fixedly coupled to each other via a rivet member.

In Patent Document 4, not only are the electrode leads coupled to each other but also the sensing member is coupled to the electrode leads using the rivet member.

Patent Document 4 has the problems that each battery cell must first be mounted in a certain case of a battery module or a battery pack and a support frame configured to support the battery cells and to allow the battery cells to be coupled thereto via the rivet member is necessary, which requires a separate space.

As such, the prior art documents fail to provide an improved high energy density battery pack configured such that 1) manufacturing efficiency is high, 2) space is efficiently used and the battery pack is lightweight, and 3) a separate part, such as a busbar, is not used.

### (Prior Art Documents)

(Patent Document 1) Korean Patent Application Publication No. 2021-0107313 (2021.09.01)
(Patent Document 2) Chinese Utility Model Publication No. 214477692 (2021.10.22)
(Patent Document 3) Korean Patent Application Publication No. 2022-0017643 (2022.02.14)
(Patent Document 4) Korean Patent Application Publication No. 2022-0012033 (2022.02.03)

### [Disclosure]

### [Technical Problem]

The present invention has been made in view of the above problems, and it is an object of the present invention to provide an improved high energy density battery pack configured such that 1) manufacturing efficiency is high, 2) space is efficiently used and the battery pack is lightweight, and 3) a separate part, such as a busbar, is not used.

### [Technical Solution]

In order to accomplish the above object, the present invention provides a battery pack including a battery cell stack formed as a result of a plurality of pouch-shaped battery cells having electrode leads protruding from opposite sides thereof being stacked in one direction, an internal connection member coupled to opposite ends of the battery cell stack from which the electrode leads protrude, and a pack frame configured to receive the battery cell stack and the internal connection member, wherein
a weld is formed at a part at which a first electrode lead and a second electrode lead protruding respectively from a first battery cell and a second battery cell of the battery cell stack, which neighbor each other, are bent in different directions and overlap each other, all battery cells constituting the battery cell stack are connected to each other in series in a zigzag fashion, and the internal connection member includes an insulation cover configured to isolate the electrode leads from the outside and a sensing member electrically connected to the weld.

One of the first electrode lead and the second electrode lead may be a positive electrode lead, and the other may be a negative electrode lead.

The battery cell stack may be a stack of the pouch-shaped battery cells disposed vertically, and a power relay assembly may be included in the pack frame.

A terminal positive electrode and a terminal negative electrode of the battery cell stack may be connected to the power relay assembly, and the power relay assembly may include a connection port for electrical connection to the outside, a relay, and a fuse.

A BMS may be disposed on at least one of two ends excluding two ends connected to the internal connection member, among four side ends of the battery cell stack, and the BMS may be connected to the sensing member.

The sensing member may include a PCB or an FPCB disposed along the interior of the insulation cover and a connection portion from which the PCB or the FPCB extends or to which the PCB or the FPCB is electrically connected, the connection portion being connected to the weld in parallel.

The connection portion, the first electrode lead, and the second electrode lead may be coupled to each other by at least one of bolting, welding, or clamping.

The weld may be formed by disposing a front welding jig having an incised first guide recess on a front surface of the bent overlap portion, disposing a rear welding jig having a second guide recess formed at a position corresponding to the first guide recess on a rear surface of the bent overlap portion, pressing the front welding jig and the rear welding jig against each other to press the bent overlap portion, and irradiating the first guide recess with a laser to proceed with welding.

In addition, the present invention provides a battery pack manufacturing method including 1) stacking a plurality of pouch-shaped battery cells having electrode leads protruding from opposite sides thereof in one direction to form a battery cell stack, 2) coupling an internal connection member to opposite ends of the battery cell stack from which the electrode leads protrude, 3) connecting a sensing member of the internal connection member to each of the battery cells of the battery cell stack, and 4) receiving the battery cell stack and the internal connection member in a pack frame, wherein
step 1) includes arranging a first battery cell and a second battery cell in a horizontal direction and overlapping a first electrode lead protruding from the first battery cell and a second electrode lead protruding from the second battery cell, welding a first overlap portion of the first electrode lead and the second electrode lead, bending the first electrode lead and the second electrode lead relative to the first overlap portion to vertically arrange the first battery cell and the second battery cell, and coupling the first battery cell and the second battery cell to each other using an adhesive member.

In the battery pack manufacturing method, all battery cells constituting the battery cell stack may be connected to each other in series in a zigzag fashion.

Connecting a terminal positive electrode and a terminal negative electrode of the battery cell stack to a power relay assembly and receiving the power relay assembly in the pack frame may be added between step 3) and step 4) or after step 4).

In addition, the present invention may provide various combinations of the above solving means.

### [Advantageous Effects]

As is apparent from the above description, in the present invention, a battery cell stack in which a plurality of pouch-shaped battery cells is connected to each other in series in a zigzag fashion is manufactured in advance, the battery cell stack is disposed in a pack frame of a battery pack, an internal connecting member is connected, a sensing member and a terminal positive electrode and a terminal positive electrode of the battery cell stack are connected to a power relay assembly, and the pack frame is assembled, whereby assembly of the battery pack is completed. In the battery pack according to the present invention, therefore, the battery pack is directly assembled from the battery cells, and the assembly step is also simple, whereby manufacturing efficiency is high.

In the battery pack according to the present invention, a separate busbar is not provided, whereby a busbar frame for the busbar is not required, and only a sensing member for connecting a sensing terminal to each battery cell in the battery cell stack is required. The sensing member is connected using a single PCB or FPCB disposed in the internal connection member, which not only simplifies a connection process but also enables connection in close proximity on the PCB or FPBC. In the present invention, a connection port for electrical connection to the outside is also included in the pack frame, which not only occupies less space due to the small number and type of parts, but also uses the space efficiently, and has a very high energy storage capacity based on space compared to a conventional battery pack.

### [Description of Drawings]

FIG. 1 is a perspective view of a battery pack according to the present invention.
FIG. 2 is an exploded perspective view of the battery pack according to the present invention.
FIG. 3 is a perspective view of the battery pack according to the present invention with an upper plate removed.
FIG. 4 is a top view of the battery pack shown in FIG. 3.
FIG. 5 is a perspective view of a battery cell stack used in the battery pack according to the present invention.
FIG. 6 is a partially assembled perspective view of the battery cell stack used in the battery pack according to the present invention.
FIG. 7 is a schematic view showing a process of assembling the battery cell stack used in the battery pack according to the present invention.
FIG. 8 is a schematic view showing the state in which a jig is coupled to form a weld.
FIG. 9 is a perspective view of a jig used to form a weld.
FIG. 10 is a top view showing the state in which two pouch-shaped battery cells are coupled to each other.
FIG. 11 is a top view showing the state in which a plurality of pouch-shaped battery cells is coupled to each other in a zigzag fashion.
FIG. 12 is an exploded perspective view of a battery cell stack and an internal connection member.
FIG. 13 is a perspective view and a partial enlarged view showing the state in which the battery cell stack and the internal connection member are coupled to each other.
FIG. 14 is a vertical sectional view taken along line AA' of FIG. 3.
FIG. 15 is a projection view showing a part at which a sensing member and an electrode lead are coupled to each other.
FIG. 16 is a front view of FIG. 15 with the internal connection member removed.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

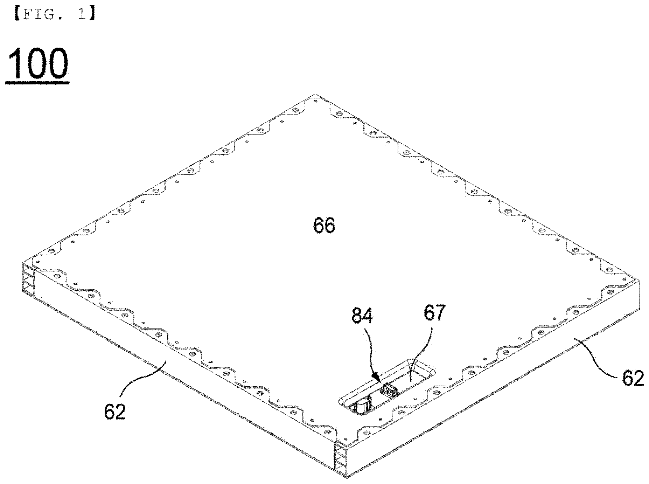

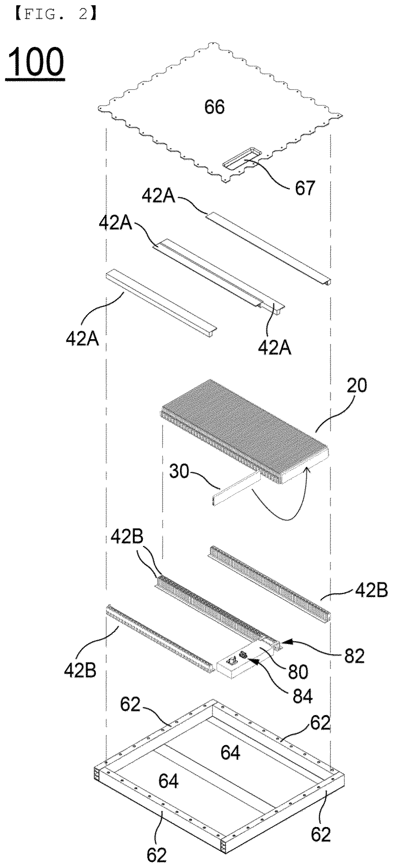

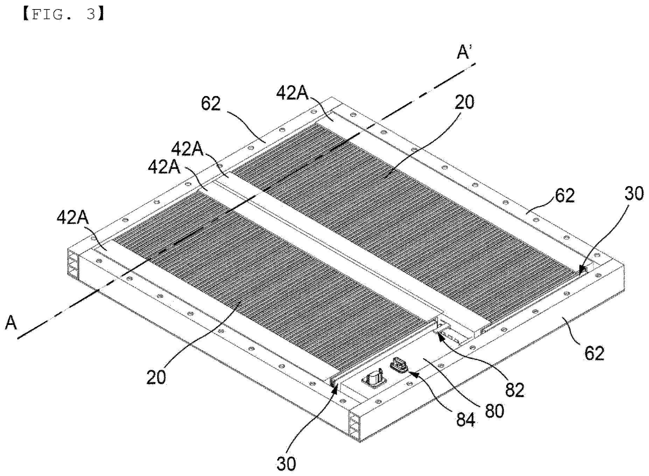

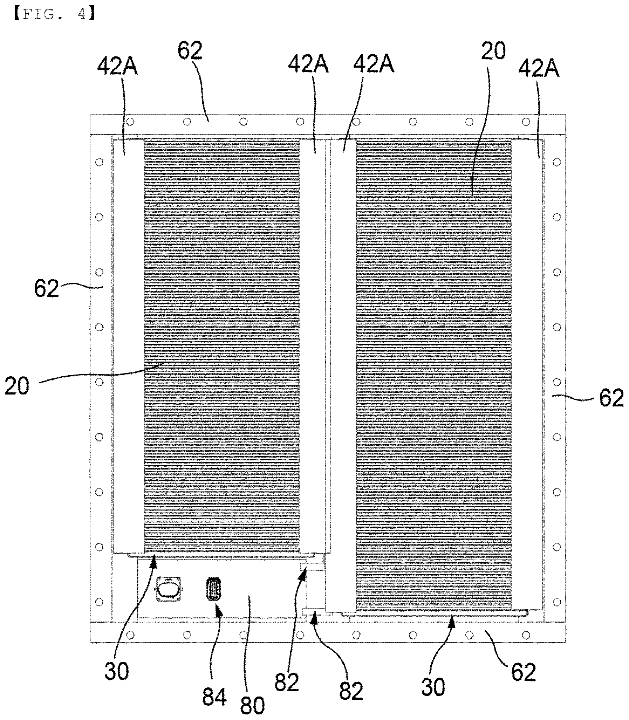

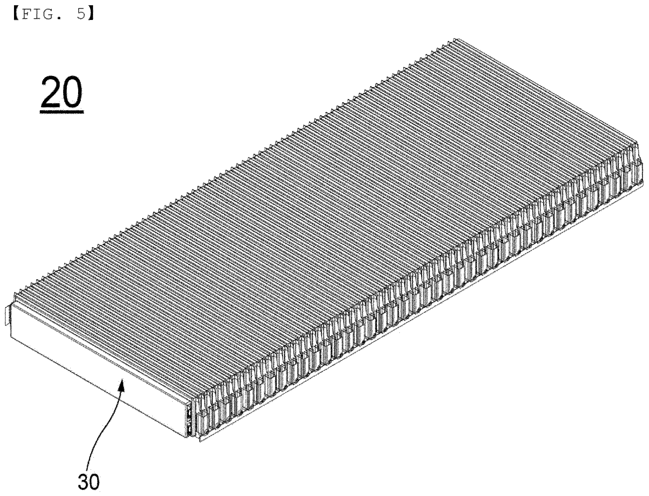

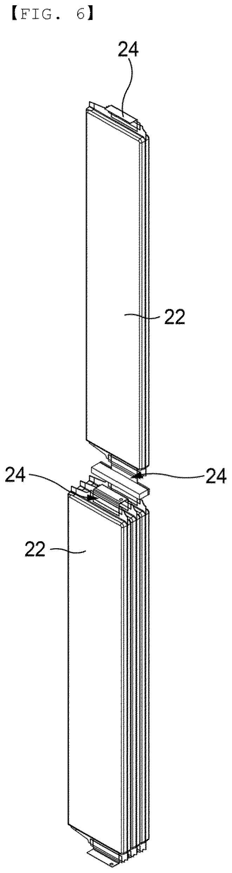

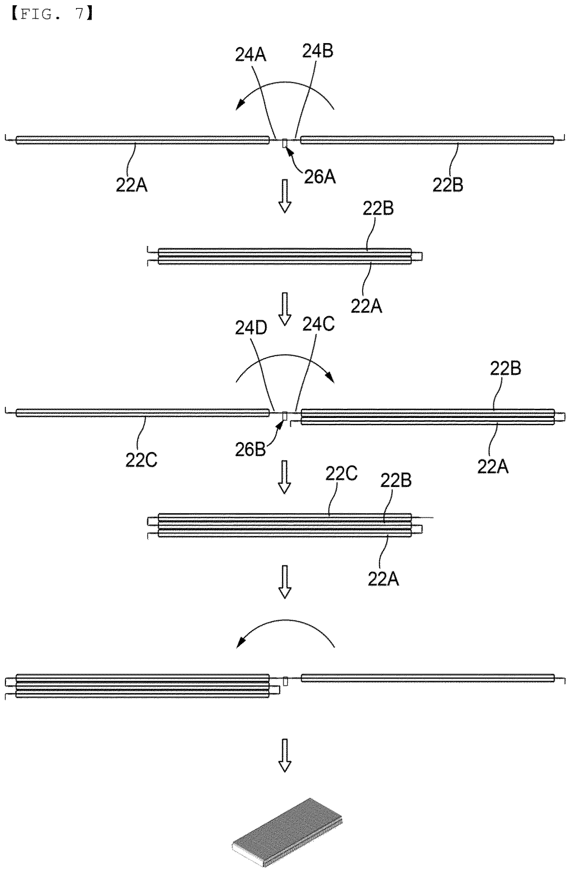

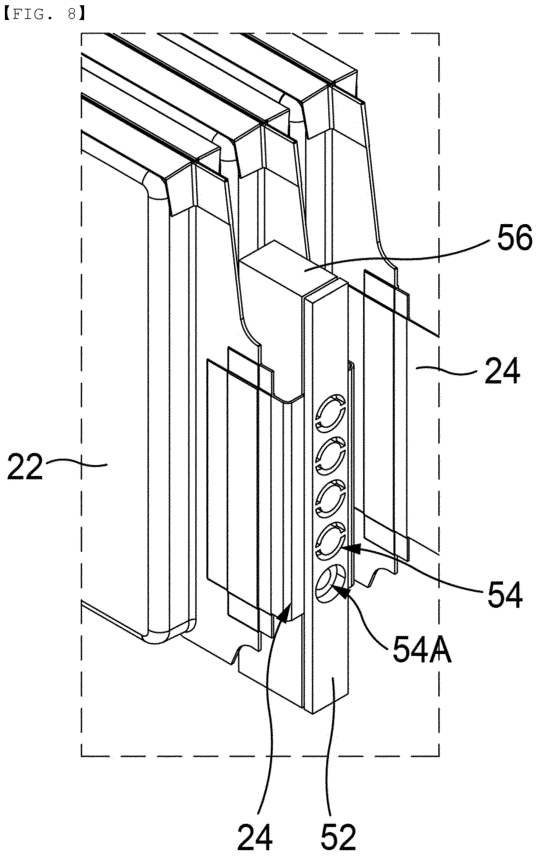

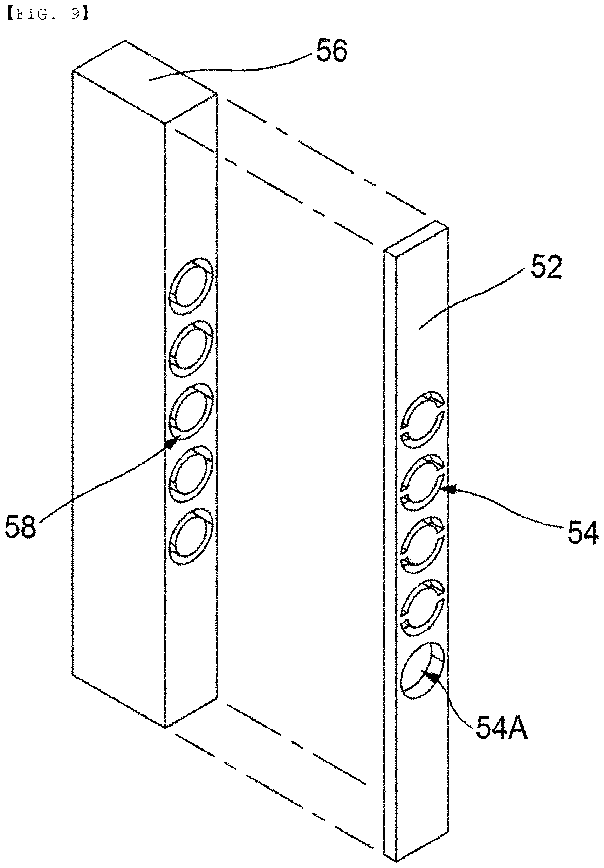

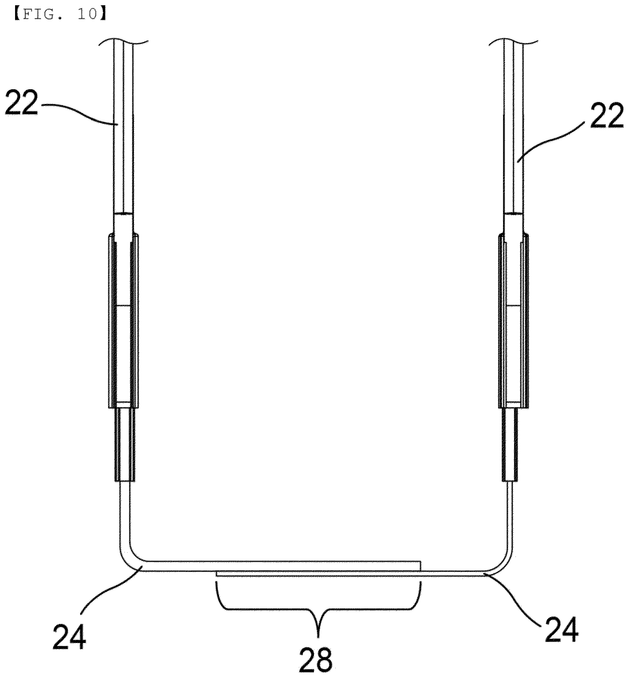

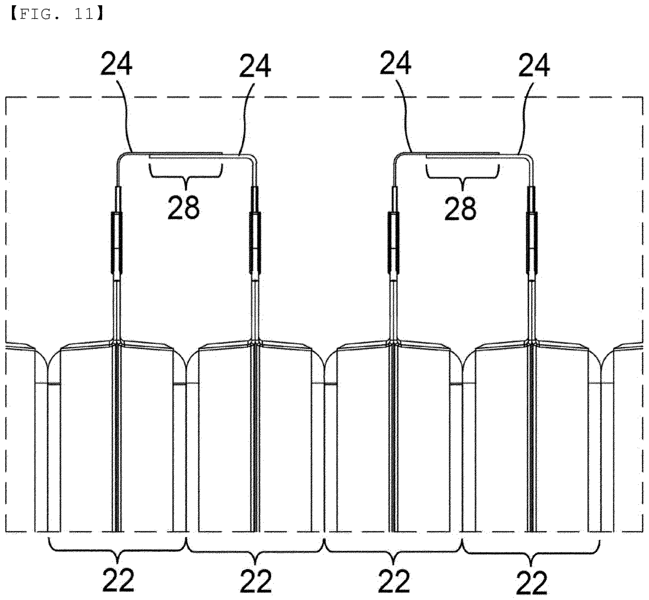

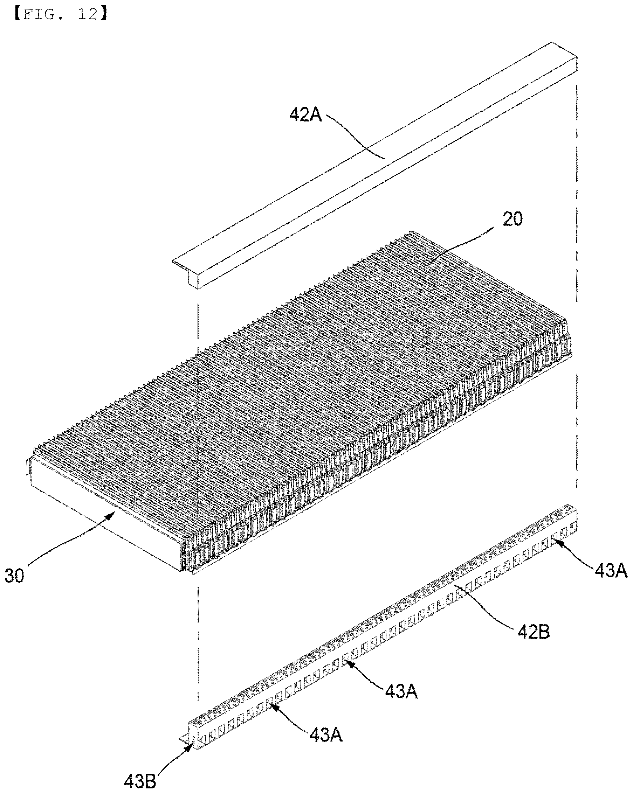

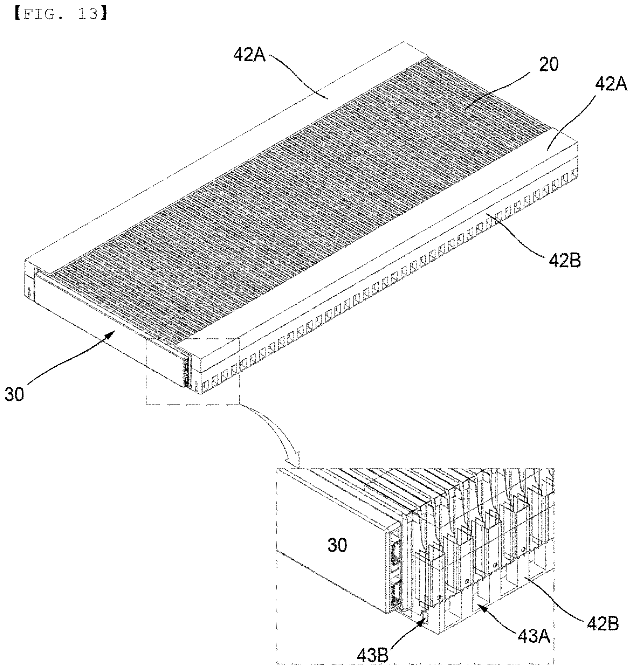

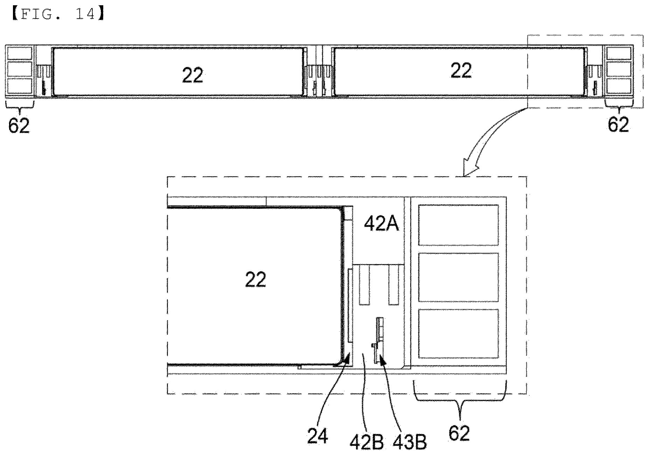

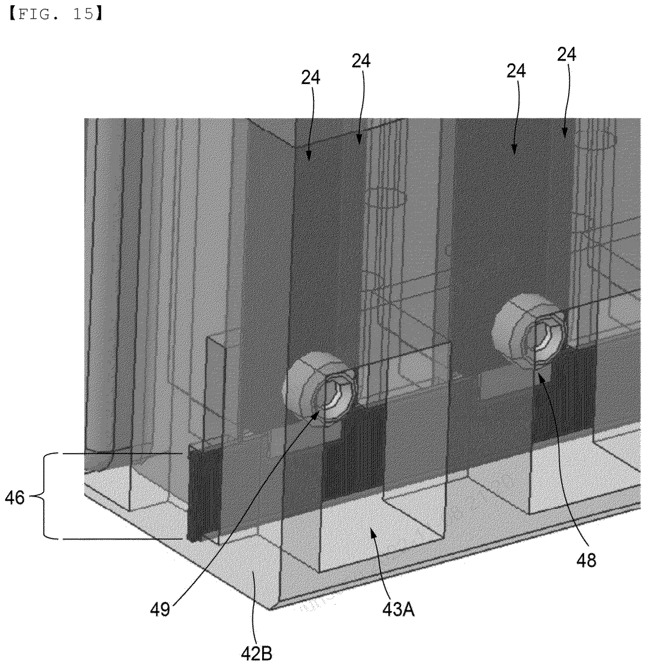

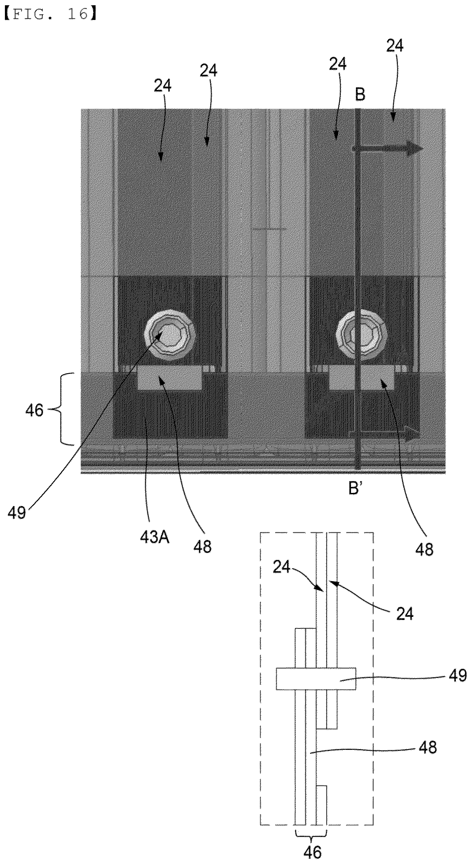

FIG. 1 is a perspective view of a battery pack according to the present invention, FIG. 2 is an exploded perspective view of the battery pack according to the present invention, FIG. 3 is a perspective view of the battery pack according to the present invention with an upper plate removed, FIG. 4 is a top view of the battery pack shown in FIG. 3, FIG. 5 is a perspective view of a battery cell stack used in the battery pack according to the present invention, FIG. 6 is a partially assembled perspective view of the battery cell stack used in the battery pack according to the present invention, FIG. 7 is a schematic view showing a process of assembling the battery cell stack used in the battery pack according to the present invention, FIG. 8 is a schematic view showing the state in which a jig is coupled to form a weld, FIG. 9 is a perspective view of a jig used to form a weld, FIG. 10 is a top view showing the state in which two pouch-shaped battery cells are coupled to each other, FIG. 11 is a top view showing the state in which a plurality of pouch-shaped battery cells is coupled to each other in a zigzag fashion, FIG. 12 is an exploded perspective view of a battery cell stack and an internal connection member, FIG. 13 is a perspective view and a partial enlarged view showing the state in which the battery cell stack and the internal connection member are coupled to each other, FIG. 14 is a vertical sectional view taken along line AA' of FIG. 3, FIG. 15 is a projection view showing a part at which a sensing member and an electrode lead are coupled to each other, and FIG. 16 is a front view of FIG. 15 with the internal connection member removed.

Referring to FIGs. 1 to 16, the battery pack 100 according to the present invention includes a battery cell stack 20 formed as a result of a plurality of pouch-shaped battery cells 22 having electrode leads 24 protruding from opposite sides thereof being stacked in one direction, an internal connection member coupled to opposite ends of the battery cell stack 20 from which the electrode leads 24 protrude, and a pack frame configured to receive the battery cell stack 20 and the internal connection member, wherein a weld 28 is formed at a part at which a first electrode lead 24A and a second electrode lead 24B protruding respectively from a first battery cell 22A and a second battery cell 22B of the battery cell stack 20, which neighbor each other, are bent in different directions and overlap each other, all battery cells 22 constituting the battery cell stack 20 are connected to each other in series in a zigzag fashion, and the internal connection member includes insulation covers 42A and 42B configured to isolate the electrode leads 24 from the outside and a sensing member electrically connected to the weld 28.

The internal connection member, which is denoted by no reference numeral, includes insulation covers 42A and 42B configured to isolate the electrode leads 24 from the outside and a sensing member electrically connected to the weld 28.

The sensing member, which is denoted by no reference numeral, includes a PCB 46 or an FPCB disposed along the interiors of the insulation covers 42A and 42B and a connection portion 48 from which the PCB 46 or the FPCB extends or to which the PCB 46 or the FPCB is electrically connected, the connection portion being connected to the weld 28 in parallel.

The pack frame, which is denoted by no reference numeral, includes a side fixing portion 62, an upper plate 66, and a lower plate 64.

A free space is formed between the weld 28 and the battery cell stack 20.

One of the first electrode lead 24A and the second electrode lead 24B is a positive electrode lead, and the other is a negative electrode lead. An overlap portion 26A of the first electrode lead 24A and the second electrode lead 24B, at which the weld 28 is formed, directly faces the battery cell stack 20. A thermally conductive resin layer (not shown) is added between the battery cell stack 20 and the lower plate 64 to transfer heat while fixing the battery cell stack 20 to the lower plate 64.

FIG. 7 is a schematic view showing a process of assembling the battery cell stack used in the battery pack according to the present invention. Referring to FIG. 7, the process may include a step of arranging a first battery cell 22A and a second battery cell 22B in a horizontal direction and overlapping a first electrode lead 24A protruding from the first battery cell 22A and a second electrode lead 24B protruding from the second battery cell 22B, a step of welding a first overlap portion 26A of the first electrode lead 24A and the second electrode lead 24B, a step of bending the first electrode lead 24A and the second electrode lead 24B relative to the first overlap portion 26A to vertically arrange the first battery cell 22A and the second battery cell 22B, and a step of coupling the first battery cell 22A and the second battery cell 22B to each other using an adhesive member (not shown).

The process may further include a step of arranging the second battery cell 22B and a third battery cell 22C in the horizontal direction and overlapping a third electrode lead 24C protruding from the second battery cell 22B and a fourth electrode lead 24D protruding from the third battery cell 22C, a step of welding a second overlap portion 26B of the third electrode lead 24C and the fourth electrode lead 24D, a step of bending the third electrode lead 24C and the fourth electrode lead 24D relative to the second overlap portion 26B to vertically arrange the second battery cell 22B and the third battery cell 22C, and a step of coupling the second battery cell 22B and the third battery cell 22C to each other using an adhesive member (not shown), wherein the direction in which the first electrode lead 24A and the second electrode lead 24B are bent and the direction in which the third electrode lead 24C and the fourth electrode lead 24D are bent relative to the second overlap portion 26B form a zigzag structure. Subsequently, battery cells are continuously stacked through the same process.

The second electrode lead 24B and the third electrode lead 24C have different polarities, and the second electrode lead 24B and the third electrode lead 24C are located at different ends in a longitudinal direction of the second battery cell 22B.

The battery cell stack 20 is a stack of the pouch-shaped battery cells 22 disposed vertically, and a power relay assembly 80 is included in the pack frame. A terminal positive electrode 82 and a terminal negative electrode 82 of the battery cell stack 20, in which all of the battery cells are connected to each other in series, are connected to the power relay assembly 80, which includes a connection port 84 for electrical connection to the outside, a relay (denoted by no reference numeral), and a fuse (not shown).

In the embodiment shown in the drawings, two battery cell stacks 220 are disposed in the pack frame, and are connected to each other in series. The pack frame includes a side fixing portion 62, an upper plate 66, and a lower plate 64, wherein the upper plate 66 includes an opening 67 in which the power relay 80 is disposed for the connection port 84 for electrical connection to the outside.

A BMS 30 is disposed on at least one of two ends excluding two ends connected to the internal connection member, among four side ends of the battery cell stack 20. In the drawings, the BMS is shown as being disposed on only one of the two ends. The BMS 30 is connected to the sensing member.

The connection portion 48, the first electrode lead 24A, and the second electrode lead 24B are coupled to each other by at least one of bolting, welding, and clamping. Clamping 49 is shown in the drawings (see FIGs. 15 and 16). Since the form in which the pouch-shaped battery cells 22 of the battery cell stack 20 are stacked is repeated, the configuration of the connection portion is also repeated.

FIGs. 8 to 11 illustrate a configuration for connecting pouch-shaped battery cells to each other in a zigzag fashion. The weld 28 is formed by disposing a front welding jig 52 having incised first guide recesses 54 and 54A on a front surface of the bent overlap portion, disposing a rear welding jig 56 having a second guide recess 58 formed at the position corresponding to the first guide recesses 54 and 54A on a rear surface of the bent overlap portion, pressing the front welding jig 52 and the rear welding jig 56 against each other to press the bent overlap portion, and irradiating the first guide recess 54 with a laser to proceed with welding. The first guide recess 54A is merely a hole, which is for clamping 49. Each of the front welding jig 52 and the rear welding jig 56 is made of a material having a higher melting point than copper and aluminum.

A method of manufacturing a battery pack 100 according to the present invention includes the steps of 1) stacking a plurality of pouch-shaped battery cells 22 having electrode leads 24 protruding from opposite sides thereof in one direction to form a battery cell stack 20, 2) coupling an internal connection member to opposite ends of the battery cell stack 20 from which the electrode leads 24 protrude, 3) connecting a sensing member of the internal connection member to each of the battery cells 22 of the battery cell stack 20, and 4) receiving the battery cell stack 20 and the internal connection member in a pack frame.

Step 1) includes a step of arranging a first battery cell 22A and a second battery cell 22B in a horizontal direction and overlapping a first electrode lead 24A protruding from the first battery cell 22A and a second electrode lead 24B protruding from the second battery cell 22B, a step of welding a first overlap portion 26A of the first electrode lead 24A and the second electrode lead 24B, a step of bending the first electrode lead 24A and the second electrode lead 24B relative to the first overlap portion 26A to vertically arrange the first battery cell 22A and the second battery cell 22B, and a step of coupling the first battery cell 22A and the second battery cell 22B to each other using an adhesive member (not shown). Subsequently, pouch-shaped battery cells 22 are continuously stacked in the same manner, and all battery cells 22 constituting the battery cell stack 20 are connected to each other in series in a zigzag fashion.

A step of connecting a terminal positive electrode 82 and a terminal negative electrode 82 of the battery cell stack 20 to a power relay assembly 80 and receiving the power relay assembly 80 in the pack frame is added between step 3) and step 4) or after step 4).

FIG. 12 is an exploded perspective view of the battery cell stack and the internal connection member, FIG. 13 is a perspective view and a partial enlarged view showing the state in which the battery cell stack and the internal connection member are coupled to each other, FIG. 14 is a vertical sectional view taken along line AA' of FIG. 3, FIG. 15 is a projection view showing a part at which the sensing member and the electrode lead are coupled to each other, and FIG. 16 is a front view of FIG. 15 with the internal connection member removed.

After the battery cell stack 20 is assembled, two divided insulation covers 42A and 42B are coupled to the opposite ends of the battery cell stack 20 from which the electrode leads 24 protrude. At this time, a part of each of the insulation covers 42A and 42B is inserted into a free space (see FIG. 11) between the weld 28 and the battery cell stack 20 to support the electrode leads 24. The PCB 46 is located in the insulating cover 42B through a PCB recess 43B before or after coupling of the insulation covers 42A and 42B. If the connection portion 48 connected to the PCB 46 is also located in a free space between the weld 28 and the battery cell stack 20, the PCB 46 must be located in the insulation cover 42B through the PCB recess 43B before coupling of the insulation covers 42A and 42B.

The insulation cover 42B is provided with a working recess 43A for access to each position corresponding to the weld 28. The electrode leads 42 and the connection portion 48 may be coupled to each other by clamping 49 through the working recess 43A.

Those skilled in the art to which the present invention pertains will appreciate that various applications and modifications are possible within the category of the present invention based on the above description.

### (Description of Reference Symbols)

100: Battery pack
20: Battery cell stack
22: Pouch-shaped battery cells
22A: First battery cell
22B: Second battery cell
22C: Third battery cell
24: Electrode lead
24A: First electrode lead
24B: Second electrode lead
24C: Third electrode lead
24D: Fourth electrode lead
26A: First overlap portion
26B: Second overlap portion
28: Weld
30: BMS
42A, 42B: Insulation covers
43A: Working recess
43B: PCB recess
46: PCB
48: Connection portion
49: Clamping
52: Front welding jig
54, 54A: First guide recesses
56: Rear welding jig
58: Second guide recess
62: Side fixing portion
64: Lower plate
66: Upper plate
67: Opening
80: Power relay assembly
82: Terminal electrode
84: Connection port

## Claims

1. A battery pack comprising:
a battery cell stack formed as a result of a plurality of pouch-shaped battery cells having electrode leads protruding from opposite sides thereof being stacked in one direction;
an internal connection member coupled to opposite ends of the battery cell stack from which the electrode leads protrude; and
a pack frame configured to receive the battery cell stack and the internal connection member, wherein
a weld is formed at a part at which a first electrode lead and a second electrode lead protruding respectively from a first battery cell and a second battery cell of the battery cell stack, which neighbor each other, are bent in different directions and overlap each other,
all battery cells constituting the battery cell stack are connected to each other in series in a zigzag fashion, and
the internal connection member comprises an insulation cover configured to isolate the electrode leads from an outside and a sensing member electrically connected to the weld.

2. The battery pack according to claim 1, wherein one of the first electrode lead and the second electrode lead is a positive electrode lead, and the other is a negative electrode lead.

3. The battery pack according to claim 1, wherein
the battery cell stack is a stack of the pouch-shaped battery cells disposed vertically, and
a power relay assembly is included in the pack frame.

4. The battery pack according to claim 3, wherein
a terminal positive electrode and a terminal negative electrode of the battery cell stack are connected to the power relay assembly, and
the power relay assembly comprises a connection port for electrical connection to the outside, a relay, and a fuse.

5. The battery pack according to claim 3, wherein
a BMS is disposed on at least one of two ends excluding two ends connected to the internal connection member, among four side ends of the battery cell stack, and
the BMS is connected to the sensing member.

6. The battery pack according to claim 5, wherein the sensing member comprises:
a PCB or an FPCB disposed along an interior of the insulation cover; and
a connection portion from which the PCB or the FPCB extends or to which the PCB or the FPCB is electrically connected, the connection portion being connected to the weld in parallel.

7. The battery pack according to claim 6, wherein the connection portion, the first electrode lead, and the second electrode lead are coupled to each other by at least one of bolting, welding, or clamping.

8. The battery pack according to claim 1, wherein the weld is formed by:
disposing a front welding jig having an incised first guide recess on a front surface of the bent overlap portion;
disposing a rear welding jig having a second guide recess formed at a position corresponding to the first guide recess on a rear surface of the bent overlap portion;
pressing the front welding jig and the rear welding jig against each other to press the bent overlap portion; and
irradiating the first guide recess with a laser to proceed with welding.

9. A battery pack manufacturing method comprising:
1) stacking a plurality of pouch-shaped battery cells having electrode leads protruding from opposite sides thereof in one direction to form a battery cell stack;
2) coupling an internal connection member to opposite ends of the battery cell stack from which the electrode leads protrude;
3) connecting a sensing member of the internal connection member to each of the battery cells of the battery cell stack; and
4) receiving the battery cell stack and the internal connection member in a pack frame, wherein
step 1) comprises:
arranging a first battery cell and a second battery cell in a horizontal direction and overlapping a first electrode lead protruding from the first battery cell and a second electrode lead protruding from the second battery cell;
welding a first overlap portion of the first electrode lead and the second electrode lead;
bending the first electrode lead and the second electrode lead relative to the first overlap portion to vertically arrange the first battery cell and the second battery cell; and
coupling the first battery cell and the second battery cell to each other using an adhesive member.

10. The battery pack manufacturing method according to claim 9, wherein all battery cells constituting the battery cell stack are connected to each other in series in a zigzag fashion.

11. The battery pack manufacturing method according to claim 9, wherein connecting a terminal positive electrode and a terminal negative electrode of the battery cell stack to a power relay assembly and receiving the power relay assembly in the pack frame is added between step 3) and step 4) or after step 4).
